Europäisches Patentamt

European Patent Office

Office européen des brevets

(19)

(11) Veröffentlichungsnummer: **0 042 038**
**B1**

(12) **EUROPÄISCHE PATENTSCHRIFT**

(45) Veröffentlichungstag der Patentschrift:
22.02.84

(51) Int. Cl.³: **G 01 F 23/24**

(21) Anmeldenummer: 81102155.9

(22) Anmeldetag: 23.03.81

(54) Einrichtung zum elektrischen Überwachen des Niveaus einer in einem Behälter enthaltenen Flüssigkeit.

(30) Priorität: 14.06.80 DE 3022398

(43) Veröffentlichungstag der Anmeldung:
23.12.81 Patentblatt 81/51

(45) Bekanntmachung des Hinweises auf die Patenterteilung:
22.02.84 Patentblatt 84/8

(84) Benannte Vertragsstaaten:
DE FR GB IT SE

(56) Entgegenhaltungen:
DE - A - 1 615 742
DE - A - 1 640 382
DE - A - 2 515 415
DE - A - 2 740 289
GB - A - 1 149 607
GB - A - 1 537 809
US - A - 2 735 301
US - A - 3 911 744

(73) Patentinhaber: VDO Adolf Schindling AG,
Gräfstrasse 103, D-6000 Frankfurt/Main (DE)

(72) Erfinder: Albrecht, Klaus, Brunnenstrasse 16,
D-6237 Liederbach 2 (DE)
Erfinder: Haub, Martin, Bahnstrasse 54,
D-6374 Steinbach/Ts. (DE)

(74) Vertreter: Könekamp, Herbert, Dipl.-Ing., Sodener
Strasse 9, D-6231 Schwalbach (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Einrichtung zum elektrischen Überwachen des Niveaus einer in einem Behälter
enthaltenen Flüssigkeit

Die Erfindung betrifft eine Einrichtung zum elektrischen Überwachen des Niveaus einer in einem Behälter enthaltenen Flüssigkeit nach dem Oberbegriff des Patentanspruchs 1.

Eine derartige bekannte Einrichtung (DE-A- 2 740 289) geht davon aus, daß das Niveau der in einem Behälter enthaltenen Flüssigkeit durch Messung der Veränderung des Widerstandswertes eines metallischen Widerstandelements in Abhängigkeit von der Temperatur, die er bei einem definierten Stromdurchfluß annimmt, gemessen werden kann. Die mittlere Temperatur der Widerstandssonde hängt davon ab, welcher Teil seiner Gesamtlänge in die Flüssigkeit eintaucht, weil der eintauchende Abschnitt stärker abgekühlt wird als der in der Luft befindliche Abschnitt. Der Gesamtwiderstand der Widerstandssonde hängt daher von dem Flüssigkeitsniveau ab. Um das Meßergebnis unabhängiger gegen Schwankungen der Umgebungstemperatur zu machen, wurde der mittlere Widerstand, den die Widerstandssonde nach Stromdurchfluß annimmt, auf einen mittleren Widerstandswert zu einem Anfangszeitpunkt bezogen, in dem die Widerstandssonde noch nicht durch den Strom aufgeheizt wurde. Im einzelnen umfaßt die Einrichtung eine Konstantstromquelle für die Widerstandssonde, an deren Anschlüssen die Anfangsspannung zu einem Anfangszeitpunkt und die Meßspannung zu einem späteren, definierten Zeitpunkt entnommen werden. Die Anfangsspannung wird in einem Speicher abgespeichert. Wenn zu dem definierten späteren Zeitpunkt die Meßspannung vorliegt, wird die Differenz zwischen der Meßspannung und der Anfangsspannung in einer Subtraktionsschaltung ermittelt. Die Differenz kann anschließend mit bestimmten vorgegebenen Festwertspannungen verglichen werden, die verschiedenen Eintauchniveaus der Widerstandssonde entsprechen, um je nach dem Vergleichsergebnis eine Anzeige oder einem Alarm auszulösen. — Diese rein analog wirkende Einrichtung hat den Nachteil, daß sie sehr abhängig von den jeweiligen Eigenschaften des zu messenden Mediums ist, insbesondere einer Methanolbeimengung in Benzin, welche die Wärmeleitfähigkeit beeinflußt.

Es ist ferner bereits bekannt (GB-A-1 537 809), anstatt einer einzigen Widerstandssonde, die den gesamten Meßbereich innerhalb des Behälters überstreicht, diesen Meßbereich durch einzelne Widerstandssonden aufzuteilen, die in unterschiedlicher Höhe im Behälter angeordnet sind. Die Mittel zum Auswerten der an den Widerstandssonden abfallenden Spannungen umfassen Komparatoren, die feststellen, ob die zugehörige Widerstandssonde in die Flüssigkeit eingetaucht ist oder nicht. Je nach dem Vergleichsergebnis wird ein fest vorgegebenes Signal zum An- bzw. Abschalten des der jeweiligen Widerstandssonde zugeordneten Anzeigeelements abgegeben. Bei dieser inkremental arbeitenden Niveaumeßeinrichtung mit quasi-analoger Anzeige bleibt der Fehler grundsätzlich kleiner als der Abstand zweier meßbarer Niveaustufen, so daß hier die Meßgenauigkeit gegenüber der rein analogen Messung verbessert werden kann. Nachteilig ist aber, daß die Zwischenwerte zwischen den einzelnen Niveaus nicht erfaßt werden, so daß in jedem Fall mit einem Fehler gleich dem Niveauabstand gerechnet werden muß. Dieser Fehler kann dadurch reduziert werden, daß die Inkremente klein gewählt werden, was aber einen großen Geräteaufwand bedingt, da eine entsprechend große Anzahl Widerstandssonden und zugehöriger Elemente der Steuer- und Auswerteeinrichtung vorzusehen sind.

Bei einer anderen bekannten Flüssigkeitsstandsmeßeinrichtung (US-A-3 911 744) ist eine Widerstandssonde mit einer Anzahl von Elektroden vorhanden, die mit einer gleichen Anzahl von Widerständen korrespondiert, die mittels Schaltern wirksam schaltbar sind. Die Schalter, denen jeweils eine Skalierung zugeordnet ist, befinden sich mit der Widerstandssonde, einer Leuchtdiode und einem Zeigermeßinstrument in einer Auswerteschaltung. Zur Bestimmung des Flüssigkeitsniveaus werden die Schalter so lange betätigt, bis die Leuchtdiode aufleuchtet. Dann kann an der Schalterskala ein Grobmeßwert und am Zeigerinstrument ein Feinmeßwert abgelesen werden. Eine solche Einrichtung, die die elektrische Leitfähigkeit der im Behälter befindlichen Flüssigkeit ausnutzt, hat den Nachteil, daß sie abhängig von den jeweiligen elektrischen Eigenschaften des zu messenden Mediums ist, insbesondere von einer Methanolbeimischung im Benzin, die die elektrische Leitfähigkeit beeinflußt. Ein weiterer erheblicher Nachteil besteht darin, daß zur Niveaumessung ein manueller Abgleich vorgenommen werden muß, was das Anwendungsgebiet einer solchen Einrichtung stark einschränkt.

Bei einer weiteren bekannten Einrichtung (US-A-2 735 301) sind über den Füllhöhenmeßbereich verteilt angeordnete erste Geberelemente vorhanden sowie zweite Geberelemente, von denen jedes einem ersten Geberelement und beide einem bestimmten Füllhöhenmeßbereich zugeordnet sind. Die Geberelemente der ersten Gruppe dienen einer groben Messung und diejenigen der zweiten Gruppe einer Feinmessung des Füllstandes. Diese Einrichtung hat den Nachteil, daß zwei getrennte Zeigerinstrumente zur Anzeige der beiden Meßwerte sowie ein manuell zu betätigender Mehrfachschalter zum Abgleich der Einrichtung benötigt werden. Wegen des notwendigen manuellen Abgleichs ist auch bei dieser Einrichtung das Anwendungsgebiet stark eingeschränkt.

Diese Nachteile der bekannten Einrichtungen soll durch die Erfindung überwunden werden. Es ist daher Aufgabe der Erfindung, eine Einrichtung zum elektrischen Überwachen des Niveaus der eingangs genannten Gattung so weiterzuentwickeln, daß der maximal mögliche Meßfehler, der insbesondere durch die Stoffeigenschaften der zu messenden Flüssigkeit hervorgerufen wird, wie bei einem digitalen Niveaumeßverfahren begrenzt bleibt, daß aber dabei trotz verhältnismäßig großer Inkremente, die einen geringen Herstellungsaufwand bedeuten, der durch das schrittweise Meßverfahren bedingte Meßfehler ebenfalls gering bleibt.

Diese Aufgabe wird durch die Weiterbildung der Einrichtung der eingangs genannten Art mit den in dem kennzeichnenden Teil des Anspruchs 1 angegebenen Merkmalen gelöst.

Mit dieser Einrichtung werden die wesentlichen Vorteile erreicht, daß wie bei einem inkrementalen Meßverfahren festgestellt wird, welche Widerstandssonde noch ganz eingetaucht ist, so daß ein Flüssigkeitsniveau an einem sogenannten Eckpunkt einer Kennlinie genau ermittelt wird und daß ausgehend von diesem Eckpunkt weiter ermittelt wird, welcher Abschnitt der nächst höheren Sonde in die Flüssigkeit eintaucht. Der Meßfehler durch eine Analogmessung des eintauchenden Abschnitts der obersten noch in die Flüssigkeit tauchenden Sonde bezieht sich dann nur auf den Niveaubereich dieser Sonde, nicht aber auf den gesamten Bereich zwischen dem untersten meßbaren Niveau und dem aktuellen Niveau. Es erfolgt also praktisch eine dem aktuellen Füllstand entsprechende Interpolation der Festwerte, die durch die Höhenabstände der diskreten Widerstandssonden definiert sind. Mit anderen Worten, die durch Parallelleitwerte zu den Widerstandssonden, die durch die Meßflüssigkeit bedingt sind, möglichen Fehler, beziehen sich dann nur auf die jeweils angeschaltete Widerstandssonde. Dadurch verringert sich der Gesamtfehler einer analogen Anzeige in Abhängigkeit vom Kehrwert der Anzahl der Widerstandssonden. Aber auch bei einer geringen Anzahl von Widerstandssonden ist bereits eine gute Annäherung der Anzeigespannung an den tatsächlichen Füllstand möglich.

Im einzelnen ist die Ablaufsteuerung, durch die die einzelnen Widerstandssonden angeschaltet werden, entsprechend Anspruch 2 eingerichtet.

Die Ablaufsteuerung bewirkt also, daß ausgehend von dem tiefsten Niveau die einzelnen Widerstandssonden durchgemessen werden, bis der Anzeigewert aus den Spannungsabfällen an der Widerstandssonde gebildet wird, die über der höchsten noch voll eingetauchten Widerstandssonde angeordnet ist. Die Bildung des Anzeigewerts erfolgt dabei durch Addition einer Festwertspannung, die dem Niveau dieser Widerstandssonde zugeordnet ist und einer Analogspannung gemäß der Eintauchtiefe der Widerstandssonde.

Mit dieser Einrichtung ist auch bei verhältnismäßig großem Höhenabstand der Widerstandssonden eine gute Anpassung der Anzeigekennlinie an unterschiedliche Behälterformen entsprechend der Maßnahme nach Anspruch 3 möglich. Der Querschnitt bzw. die Breite der Widerstandssonde über ihre Länge ist dabei gemäß der Behälterform gewählt.

Alle Widerstandssonden können mit geringem Aufwand, insbesondere bei höheren Stückzahlen, nach Anspruch 4, auf einem Substrat in Dickschichttechnik oder Dünnschichttechnik aufgetragen sein.

Die Erfindung wird im folgenden anhand einer Zeichnung mit vier Figuren erläutert. Es zeigt

Figur 1 ein Blockschaltbild der Einrichtung,

Figur 2 eine Seitenansicht auf die auf einem Substrat aufgetragenen Widerstandssonden,

Figur 3 eine Kennlinie der an einer Widerstandssonde abfallenden Spannung in Abhängigkeit von der Einschaltzeit und

Figur 4 eine Variante der Widerstandssonden.

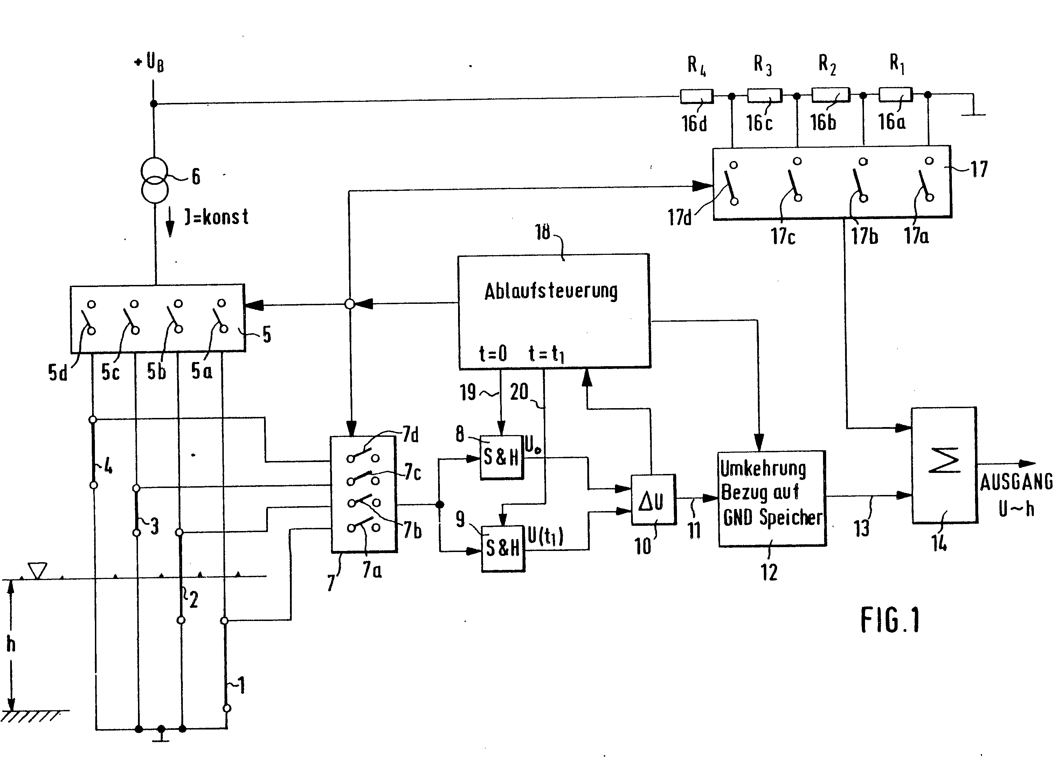

In Figur 1 sind mit 1, 2, 3, 4 vier Widerstandssonden bezeichnet, die in unterschiedlicher Höhe, nämlich aneinander angrenzend, in einem Behälter untergebracht sind. Die Widerstandssonden sind über eine Schaltergruppe 5 mit je einem Schalter 5a, 5b, 5c, 5d individuell an eine Konstantstromquelle 6 anschließbar.

Jede Widerstandssonde ist über eine zweite Schaltergruppe 7 mit den Schaltern 7a, 7b, 7c, 7d mit zwei Abtast- und Halteschaltungsanordnungen verbindbar. Die Ausgänge dieser Abtast- und Halteschaltungsanordnungen 8 und 9 sind zu einem Subtrahierer 10 geführt, dessen einer Ausgang 11 an eine Schaltungsanordnung zur Vorzeichenumkehr der Differenz 12, die außerdem speichernd wirkt, angeschlossen ist. Ein Ausgang 13 dieser Schaltungsanordnung 12 zur Vorzeichenumkehr der Differenz ist an einen Eingang eines Analog-Summierers 14 angeschlossen.

Ein weiterer Eingang des Analog-Summierers 14 steht mit einem Festwertspannungsgeber in Verbindung. Dieser Festwertspannungsgeber besteht im wesentlichen aus einer Widerstandskette 16a, 16b, 16c, 16d, die ebenso wie die Konstantstromquelle von einer Spannung $+U_B$ gespeist wird. Abzweigepunkt dieser Widerstandskette können über gesteuerte Schalter 17a, 17b, 17c, 17d mit dem Summierer verbunden werden. Die Schalter 17a bis 17d sind Bestandteile einer dritten Schaltergruppe 17.

Eine Einrichtung zur Ablaufsteuerung 18 steuert in Meßzyklen die Schaltergruppen 5, 7 und gegebenenfalls 17 sowie die speichernde Schaltungsanordnung zur Vorzeichenumkehr der Differenz 12. Weitere Ausgänge 19 und 20 der Einrichtung 18 dienen zur Steuerung der Abtast- und Halteschaltungsanordnung 8 bzw. 9. Ein Eingang der Einrichtung 12 ist mit einem zweiten Ausgang des Subtrahierers 10 verbunden, der über die Ablaufsteuereinrichtung 18 die Speicherung des Analogwerts in der Schaltungsanordnung 12 und die Abgabe eines Spannungsfestwerts durch Schließen eines der Schalter 17a bis 17d bewirkt.

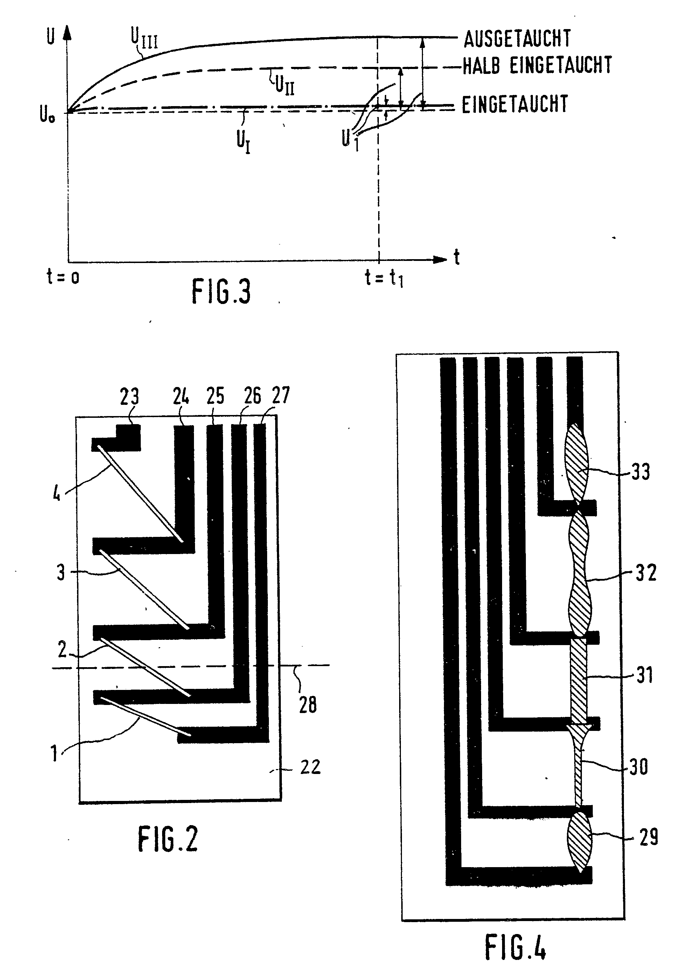

Die Anordnung der Widerstandssonden 1 bis 4 geht im einzelnen aus Figur 2 hervor, in der diese Widerstandssonden in Dünn- oder Dickfilmtechnik auf einem Substrat 22 aufgebracht dargestellt sind. In Figur 2 sind ferner Zuleitungen 23 bis 27 zu den Widerstandssonden erkennbar, die als gedruckte Leiterzüge realisiert sind. Der aktuelle Flüssigkeitsstand ist in Figur 2 mit der unterbrochenen Linie 28 angedeutet.

Die Einrichtung zur Ablaufsteuerung 18 schaltet zu Beginn eines Meßzyklus die Schalter 5a und 7a ein. Damit wird die Widerstandssonde 1 zu einem Zeitpunkt $t_0$ mit Konstantstrom beaufschlagt, wodurch an ihm die Spannung $U_0$ (vgl. Figur 3) abfällt. Die Spannung $U_0$ wird über den Schalter 7a geführt und in der Abtast- und Halteschaltungsanordnung 8 gespeichert. Nach einer vorgegebenen Zeit $t_1$, die etwa eine Sekunde bis zwei Sekunden nach $t_0$ liegen kann, wird die dann an der Widerstandssonde abfallende Spannung $U_1$ in der Abtast- und Halteschaltungsanordnung 9 gespeichert. Die Spannung $U_1$ nimmt eine unterschiedliche Höhe entsprechend den Spannungsverläufen $U_I$, $U_{II}$, $U_{III}$ in Abhängigkeit davon an, ob die Widerstandssonde ganz eingetaucht ist ($U_I$), ganz ausgetauscht ist ($U_{III}$) oder nur teilweise eingetaucht ist ($U_{II}$). Der Subtrahierer 10 bildet die Differenz der Spannungen ($U_1 - U_0$). Wenn die Spannungsdifferenz, was entsprechend Figur 2 anzunehmen ist, bei ganz eingetauchter Widerstandssonde 1 fast Null ist, wird in ähnlicher Weise nachfolgend die Widerstandssonde 2 mit Konstantstrom beaufschlagt, die nur halb eingetaucht ist. Demzufolge stellt der Subtrahierer 10 eine größere Spannungsdifferenz ($U_1 - U_0$) fest, da sich die nur teilweise eingetauchte Widerstandssonde stärker erwärmen kann, und er gibt einen entsprechenden Befehl an die Einrichtung zur Ablaufsteuerung 18. Dadurch wird der der Widerstandssonde 2 zugeordnete Schalter 17b in der dritten Schaltergruppe des Festwertspannungsgebers geschlossen, so daß eine fest vorgegebene Spannung in den Analog-Summierer 14 eingespeist wird, welche angibt, daß die Widerstandssonde 1 ganz eingetaucht ist, aber die Widerstandssonde 2 noch nicht vollständig eingetaucht ist. Zu dieser Festwertspannung wird eine Spannung addiert, welche der Eintauchhöhe der Widerstandssonde 2 entspricht, also dieser Eintauchhöhe analog ist. Dies geschieht durch die Vorzeichenumkehr der Spannungsdifferenz ($U_1 - U_0$) durch die Schaltungsanordnung 12 und die Speicherung dieses Spannungswerts. Dabei kann auch eine Potentialanpassung — Bezug auf Grund — durchgeführt werden. An dem Ausgang des Analog-Summierers 14 ist also eine Anzeigespannung abgreifbar, die die vollständig eingetauchte Widerstandssonde und die Eintauchtiefe der nächst höheren Widerstandssonde analog beinhaltet. Diese Anzeigespannung wird bis zu dem nächsten Meßzyklus gehalten.

In Figur 4 sind auf einem Substrat aufgetragene Sonden 29, 30, 31, 32, 33 mit zugehörigen nicht bezifferten Zuleitungen dargestellt, die eine genaue Annäherung an eine spezielle Tankkennlinie ermöglichen. Hierzu haben die einzelnen Widerstandssonden entlang ihrer Längsausdehnung unterschiedliche Durchmesser bzw. Breiten. Die Änderung des Widerstandswerts jeder Widerstandssonde entlang der Längsausdehnung, die der möglichen Niveauänderung entspricht, hängt dabei von der Breite der Widerstandssonde ab: Verhältnismäßig breite Abschnitte der Widerstandssonde bewirken nur eine verhältnismäßig geringe Änderung des Gesamtwiderstandswerts der Widerstandssonde und umgekehrt dünnere Abschnitte eine große Widerstandsänderung des Gesamtwiderstandswerts. Diese Widerstandsänderungen werden bei dem Analogspannungsanteil der Anzeigespannung berücksichtigt.

**Patentansprüche**

1. Einrichtung zum elektrischen Überwachen des Niveaus einer in einem Behälter enthaltenen Flüssigkeit, mit mindestens einer temperaturabhängigen Widerstandssonde (1, 2, 3, 4), die in die Flüssigkeit, deren Niveau überwacht werden soll, eintaucht und über einen durch eine Ablaufsteuereinrichtung (18) gesteuerten Schalter (5) an eine Konstantstromquelle (6) angeschlossen ist, mit durch die Ablaufsteuereinrichtung (18) gesteuerten Mitteln (8, 9) zum Speichern der an der Widerstandssonde (1, 2, 3, 4) abfallenden Anfangsspannung zu einem Anfangszeitpunkt und der Meßspannung zu einem definierten Zeitpunkt nach Anschluß der Konstantstromquelle (6), mit Mitteln (10, 12) zum Auswerten dieser Spannungen durch Subtraktion der Meßspannung von der Anfangsspannung zum Bilden einer dem Niveau entsprechenden Anzeigespannung sowie mit einem Festwertspeicher eines Vorrats von Festwertspannungen, dadurch gekennzeichnet, daß mehrere Widerstandssonden (1, 2, 3, 4) in unterschiedlicher Höhe in dem Behälter angeordnet sind, die durch die Ablaufsteuereinrichtung (18) gesteuert eine nach der anderen mit der Konstantstromquelle (6) und mit den Mitteln (10, 12) zum Auswerten der an ihnen abfallenden Spannung angeschlossen werden, daß jeweils eine der Festwertspannungen des Festwertspeichers einer Widerstandssonde (1, 2, 3, 4) zugeordnet ist, und daß ein Summierer (14) vorhanden ist, der zur Bildung der Anzeigespannung mit der ausgewerteten, der Eintauchtiefe der angeschalteten Widerstandssonde entsprechenden Spannung und der dieser Widerstandssonde zugeordneten Festwertspannung beaufschlagt ist.

2. Einrichtung nach Anspruch 1, dadurch gekennzeichnet, daß die zyklisch ablaufende Ablaufsteuerung so ausgebildet ist, daß in einem Meßzyklus die nächst höhere Widerstandssonde (z. B. 2) über der höchsten voll eingetauchten Widerstandssonde (z. B. 1) eingeschaltet wird und daß aus der an dieser nächst höheren Widerstandssonde (z. B. 2) abfallenden Spannung die Anzeigespannung gebildet wird.

3. Einrichtung nach Anspruch 1 oder 2, dadurch gekennzeichnet, daß die Widerstandssonden (29 bis 33) zur Anpassung der Anzeigekennlinie an die Behälterform mit über ihre Länge variablem Querschnitt bzw. variabler Breite ausgebildet sind.

4. Einrichtung nach einem der Ansprüche 1 bis 3, dadurch gekennzeichnet, daß alle Widerstandssonden auf einem Substrat (22) in Dickschichttechnik oder Dünnschichttechnik aufgetragen sind.

## Claims

1. Apparatus for electrically monitoring the level of a liquid contained in a container, with at least one temperature-dependent resistance probe (1, 2, 3, 4) which is immersed in the liquid whose level is to be monitored, and which is connected to a constant current source (6) by means of a switch (5) controlled by an operation control apparatus (18), with means (8, 9), controlled by the operation control apparatus (18), for storing the initial voltage which drops at the resistance probe (1, 2, 3, 4) at an initial instant and for storing the measuring voltage at a defined instant after connection of the constant current source (6), with means (10, 12) for evaluating these voltages by subtraction of the measuring voltage from the initial voltage for forming an indicating voltage corresponding to the level, ans also with a fixed value store for storing fixed value voltages, characterised in that a plurality of resistance probes (1, 2, 3, 4) are arranged at different heights in the container which, controlled by the operation control apparatus (18), are connected one after the other to the constant current source (6) and to the means (10, 12) for evaluating the voltage dropping at said probes, that one of the fixed value voltages of the fixed value store in each case in associated with a resistance probe (1, 2, 3, 4) and that a summator (14) is provided which for forming the indicating voltage is fed with the evaluated voltage corresponding to the depth of immersion of the connected-in resistance probe and with the fixed value voltage associated with this resistance probe.

2. Apparatus according to claim 1, characterised in that the cyclically operating operation control apparatus is so constructed that in a measuring cycle the next-higher resistance probe (e. g. 2) above the highest fully immersed resistance probe (e. g. 1) is switched-in, and that the indicating voltage is formed from the voltage dropping at this next-higher resistance probe (e. g. 2).

3. Apparatus according to claim 1 or 2, characterised in that the resistance probes (29 to 33) are constructed with variable width or a cross-section variable over their length, for adapting the indication characteristic to the form of the container.

4. Apparatus according to one of claims 1 to 3, characterised in that all the resistance probes are formed by coating on a substrate (22) by a thick-film or thin-film technique.

## Revendications

1. Dispositif de surveillance électrique du niveau d'un liquide contenu par un réservoir, à l'aide d'au moins une sonde résistive (1, 2, 3, 4) dépendant de la température, qui plonge dans le liquide dont le niveau doit être surveillé, et qui est raccordée à une source (6) de courant constant par l'intermédiaire d'un interrupteur (5) commandé par un dispositif (18) de commande du déroulement, comportant des moyens (8, 9) commandés par le dispositif (18) de commande du déroulement en vue de mémoriser à un instant initial la tension de départ qui chute dans la sonde résistive (1, 2, 3, 4) et la tension de mesurage à un instant déterminé après le raccordement de la source (6) de courant constant, des moyens (10, 12) pour interpréter ces tensions en soustrayant la tension de mesurage de la tension de départ afin de former une tension d'affichage correspondant au niveau, ainsi qu'une mémoire de valeurs fixes d'une réserve en tensions de valeurs fixes, caractérisé par le fait que, dans le réservoir, sont disposées à des hauteurs différentes plusieurs sondes résistives (1, 2, 3, 4) qui, commandées par le dispositif (18) de commande du déroulement, sont raccordées les unes après les autres à la source (6) de courant constant et aux moyens (10, 12) pour interpréter la tension qui chute sur ces sondes, par le fait que l'une respective des tensions à valeurs fixes de la mémoire de valeurs fixes est à chaque fois associée à une sonde résistive (1, 2, 3, 4), et par le fait qu'il est prévu un sommateur (14) qui, en vue de la formation de la tension d'affichage, est alimenté par la tension interprétée correspondant à la profondeur d'immersion de la sonde résistive raccordée, et par la tension de valeur fixe associée à cette sonde résistive.

2. Dispositif selon la revendication 1, caractérisé par le fait que la commande du déroulement, fonctionnant cycliquement, est réalisée de telle sorte que, dans un cycle de mesurage, la sonde résistive (par exemple 2) située immédiatement plus haut soit enclenchée au-dessus de la sonde résistive la plus haute (par exemple 1) intégralement immergée, et que la tension d'affichage soit formée à partir de la tension qui chute sur cette sonde résistive (par exemple 2) située immédiatement plus haut.

3. Dispositif selon la revendication 1 ou 2, caractérisé par le fait que les sondes résistives (29 à 33) sont réalisées, en vue de l'adaption de la courbe caractéristique de l'affichage à la forme du réservoir, avec une section variable ou une largeur variable sur leur longueur.

4. Dispositif selon l'une des revendications 1 à 3, caractérisé par le fait que toutes les sondes résistives sont déposées sur un substrat (22) par la technique de couche épaisse ou la technique de couche mince.

FIG.1

FIG.3

FIG.2

FIG.4